# FASCICULE DE BREVET EUROPEEN

(11) **EP 3 007 942 B1**
(45) Date de publication et mention de la délivrance du brevet: **11.12.2019**
(21) Numéro de dépôt: 14729673.5
(22) Date de dépôt: 13.06.2014
(51) Int. Cl.: B60S 1/48, B60S 1/50, B67B 7/00, B65D 1/04

(54) **SUPPORT POUR RÉCIPIENT DE FLUIDE LAVE-GLACE, RÉCIPIENT DE FLUIDE LAVE-GLACE ET DISPOSITIF COMPRENANT LESDITS SUPPORT ET RÉCIPIENT**
TRÄGER FÜR EINEN SCHEIBENREINIGUNGSFLÜSSIGKEITSBEHÄLTER, SCHEIBENREINIGUNGSFLÜSSIGKEITSBEHÄLTER UND VORRICHTUNG MIT DIESEM TRÄGER UND DIESEM BEHÄLTER
SUPPORT FOR WINDSHIELD WASHER FLUID CONTAINER, WINDSHIELD WASHER FLUID CONTAINER, AND DEVICE COMPRISING SAID SUPPORT AND CONTAINER

(30) Priorité: 14.06.2013 FR 1355548
(43) Date de publication de la demande: 20.04.2016
(73) Titulaire: Valeo Systèmes d'Essuyage, 78322 Le Mesnil Saint Denis (FR)
(72) Inventeur: CAILLOT, Gérald, F-78720 Cernay la Ville (FR); GIRAUD, Frédéric, F-78610 Le Perray en Yvelines (FR); TREBOUET, Marcel, F-78450 Chavenay (FR)
(74) Mandataire: Callu-Danseux, Violaine
(86) Numéro de dépôt international: PCT/EP2014/062329
(87) Numéro de publication internationale: WO 2014/198872

(56) Documents cités:
- DE-A1-102006 022 477
- US-A- 3 212 661
- US-A- 5 343 903
- US-A1- 2009 211 605

## Description

La présente invention a pour objets un support pour récipient de fluide lave-glace, un récipient de fluide lave-glace, un dispositif d'alimentation en fluide lave-glace, un système de lavage de pare-brise de véhicule, un véhicule et un procédé de commande du système de lavage de pare-brise d'un véhicule.

Les automobiles sont couramment équipées de systèmes de lavage pour nettoyer le pare-brise de ce qui pourrait bloquer la vision des passagers du véhicule, tel que des éclaboussures, des insectes, du givre, de la glace. Ces systèmes de lavage sont accompagnés de systèmes d'essuie-glaces et comprennent un récipient de fluide lave-glace installé sur le véhicule et des moyens d'aspersion pour permettre au liquide contenu dans le récipient d'être pulvérisé en direction du pare-brise. Pour un nettoyage amélioré du pare-brise, il est possible de compléter le lave-glace habituel par un produit supplémentaire adapté à la période de l'année et/ou à l'effet recherché. Par exemple, ce produit peut améliorer l'enlèvement des insectes en été ou le dégivrage du pare brise en hiver. Il est soit ajouté au mélange de lave-glace habituel, soit contenu dans un second récipient et aspergé sur le pare-brise en combinaison avec le lave-glace.

De tels systèmes sont peu flexibles et nécessitent soit un montage complexe avec plusieurs pompes dans le cas de plusieurs récipients, ou de vidanger le récipient, de remplacer le liquide par un liquide adéquat et/ou de faire l'addition d'un produit supplémentaire dans le cas d'un seul récipient.

De plus, dans les systèmes actuels, la fixation et le maintien d'un récipient ne sont pas adaptés à des mises en place et des retraits répétés de celui-ci ou encore à un démontage du support. Le support est généralement configuré pour un type de récipient et n'est pas apte à recevoir des récipients de formes et/ou volumes variés. De même, la technologie actuelle ne permet pas de connaître quel type de fluide est en cours d'utilisation. US-A-2009/0211605 montre le préambule de la revendication 1.

La présente invention a pour but de simplifier le système de lavage, d'en améliorer la flexibilité et la praticité tout en améliorant le nettoyage du pare-brise. De manière générale, elle propose un perfectionnement à la technologie actuelle dans ce domaine. L'invention propose, en outre, de résoudre au moins une partie des problèmes évoqués ci-dessus.

A cet effet, l'invention a pour objet un récipient de fluide lave-glace amovible et interchangeable selon la revendication 1 ainsi qu'un support selon la revendication 6, ledit support étant configuré pour être fixé à un véhicule et comprenant un logement pour un ou des récipients et des moyens de lecture configurés pour détecter des moyens d'identification portés par le ou les récipients.

Autrement dit, le support comprend un logement dans lequel il est possible de placer et de retirer facilement un récipient de fluide lave-glace, en particulier un récipient pré-rempli. Ce placement et ce retrait faciles du récipient permettent de pouvoir changer de manière simple et pratique le fluide lave-glace autant de fois que nécessaire. De plus, les moyens de lecture portés par le support et les moyens d'identification portés par le ou les récipients permettent de connaître des informations concernant le fluide de lavage en cours d'utilisation, telles que le type de fluide, la quantité utilisée, la quantité restante, etc. L'utilisateur peut ainsi adapter le fluide lave-glace en fonction de ses besoins, de la saison et/ou de l'effet recherché mais également savoir quand changer le récipient.

Selon différents modes de réalisation de l'invention, qui pourront être pris ensemble ou séparément :
- lesdits moyens de lecture sont configurés pour détecter avec ou sans contact les moyens d'identification,
- lesdits moyens de lecture sont configurés pour lire le code d'un transpondeur,
- ledit support comprend un boîtier électronique de logement des moyens de lecture.

L'invention concerne encore un récipient de fluide lave-glace amovible et interchangeable, configuré pour être monté dans le support tel que décrit précédemment et comprenant des moyens d'identification configurés pour être détectés par des moyens de lecture portés par le support.

Selon différents modes de réalisation de l'invention, qui pourront être pris ensemble ou séparément :
- lesdits moyens d'identification sont configurés pour être détectés avec ou sans contact par les moyens d'identification,
- lesdits moyens d'identification comprennent un transpondeur,
- ledit récipient comprend sur une de ses parois un évidement ou une cavité de logement des moyens d'identification,
- lesdits moyens d'identification sont recouverts ou portés par une étiquette,
- ledit récipient comprend une étiquette collée sur ladite paroi et recouvrant l'évidement.

L'invention concerne encore un dispositif d'alimentation en fluide lave-glace comprenant un support et un récipient tels que décrits précédemment.

Selon différents modes de réalisation de l'invention, qui pourront être pris ensemble ou séparément :
- lesdits moyens d'identification et de lecture sont en regard les uns des autres, en position de montage du récipient dans le logement du support,
- lesdits moyens d'identification et de lecture peuvent être séparés les uns des autres par une paroi du récipient et/ou une paroi du support, en position de montage du récipient dans le logement du support.

L'invention concerne également un véhicule comprenant un système de lavage de pare-brise de véhicule tel que décrit et en outre, dans l'habitacle, des moyens d'affichage d'informations relatives au récipient.

L'invention concerne enfin un procédé de commande du système de lavage de pare-brise d'un véhicule tel que décrit comprenant une étape d'identification du ou des récipients dans le logement du support.

Selon différents modes de réalisation de cet aspect de l'invention, qui pourront être pris ensemble ou séparément :
- ledit procédé comprend une étape de transmission d'une information relative au récipient à l'habitacle du véhicule,
- ladite information transmise comprend une ou plusieurs des informations suivantes : le type de fluide contenu dans le récipient, le niveau de fluide dans le récipient, la quantité de fluide déjà utilisé, l'intérêt d'utiliser le fluide du récipient pour le lavage du pare-brise, etc.

Selon un autre aspect de l'invention, qui peut être utilisé avec tout ou partie des caractéristiques précédentes ledit support comprend un logement pour un ou des récipients tels que décrits précédemment configuré pour autoriser une mise en place et une extraction répétées du ou desdits récipients.

Selon différents modes de réalisation de cet aspect de l'invention, qui pourront être pris ensemble ou séparément :
- ledit logement est configuré pour permettre une fixation du ou desdits récipients par encliquetage,
- ledit support comprend des moyens de raccordement à un desdits récipients permettant de mettre en communication ledit récipient et un circuit dudit fluide,
- lesdits moyens de raccordement sont configurés pour permettre l'ouverture d'un desdits récipients,
- ledit support comprend des moyens de fixation d'une pompe dudit fluide,
- lesdits moyens de raccordement comprennent un conduit, destiné à relier ledit récipient et ladite pompe,
- ledit conduit comprend une extrémité biseautée pour l'ouverture du ou desdits récipients
- ledit support comprend des moyens de guidage du ou de chaque récipient lors de son montage dans le logement,
- lesdits moyens de guidage comprennent une nervure ou fente rectiligne,
- lesdits moyens de guidage sont localisés sur des parois latérales dudit support.

Selon cet aspect de l'invention, ledit récipient est configuré pour être monté dans le support tel que décrit précédemment.

Selon différents modes de réalisation de l'invention, qui pourront être pris ensemble ou séparément :
- ledit récipient comprend des moyens de guidage du ou de chaque récipient lors de son montage dans le logement,
- lesdits moyens de guidage sont des moyens de guidage en translation,
- lesdits moyens de guidage comprennent une rainure ou une nervure rectiligne,
- lesdits moyens de guidage sont localisés sur des parois latérales du récipient,
- ledit récipient comprend au moins une ouverture, dite première ouverture,
- ladite première ouverture est apte à coopérer avec lesdits moyens de raccordement,
- ledit récipient est rigide et comprend une deuxième ouverture,
- ladite deuxième ouverture est apte à maintenir une pression à l'intérieur dudit récipient identique à la pression atmosphérique,
- ledit récipient est souple et ladite première ouverture est la seule ouverture dudit récipient,
- ledit récipient comprend des moyens de fermeture desdites ouvertures,
- lesdits moyens de fermeture sont des opercules,
- lesdits opercules sont configurées pour refermer lesdites ouvertures après extraction dudit récipient hors dudit support,
- ledit récipient est pré-rempli d'un fluide lave-glace,
- ledit fluide est un liquide dégivrant, un liquide nettoyant ou un liquide anti-insecte,
- ledit récipient comprend deux compartiments indépendants, chacun desdits compartiments comprend une dite première ouverture,
- lesdites premières ouvertures desdits compartiments sont opposées l'une de l'autre.

Selon cet aspect de l'invention, ledit dispositif d'alimentation en fluide lave-glace comprend un support et un récipient tels que décrits précédemment. Ledit récipient est avantageusement encliqueté dans le ou les logements dudit récipient.

Selon différents modes de réalisation de l'invention, qui pourront être pris ensemble ou séparément :
- ledit dispositif comprend ladite pompe,
- ledit support et/ou ledit récipient comprennent des moyens de détrompage du positionnement du récipient, en particulier permettant de visualiser le compartiment destiné à être utilisé,
- ledit support et/ou ledit récipient comprennent des moyens de guidage complémentaires permettant la mise en place du ou des récipients dans le logement,
- les moyens de raccordement pénètrent dans le ou lesdits récipients, en particulier dans ledit compartiment.

Selon encore un autre aspect de l'invention qui peut être utilisé avec tout ou partie des caractéristiques précédentes, ledit récipient définit une enceinte interne reliée à une ouverture de distribution de fluide et comporte à une extrémité opposée à l'ouverture de distribution des moyens de préhension du récipient.

Ladite enceinte interne comprend une première partie, située au voisinage de l'ouverture de distribution, qui a une section différente de celle d'une deuxième partie située au voisinage des moyens de préhension.

Selon différents modes de réalisation de cet aspect de l'invention, qui pourront être pris ensemble ou séparément :
- ladite première partie a une section plus importante que celle de la deuxième partie de façon à ce que le réservoir ait un ventre au niveau de cette première partie,
- ladite première partie a une section plus petite que celle de la deuxième partie de façon à ce que le réservoir ait un creux au niveau de cette première partie,
- lesdites sections des première et deuxième parties ont chacune une forme sensiblement rectangulaire,
- ledit récipient comprend deux parois latérales sensiblement planes et parallèles, reliées à leurs extrémités arrière à une paroi arrière sensiblement plane et perpendiculaire aux parois latérales, et à leurs extrémités avant à une paroi avant qui comprend une partie supérieure et une partie inférieure, la partie inférieure de la paroi avant étant sensiblement plane et parallèle à la paroi arrière et reliée à la partie supérieure de la paroi avant par une partie inclinée,
- ladite partie supérieure de la paroi avant comprend un renfoncement ou une cavité définissant avec la partie supérieure du récipient lesdits moyens de préhension.

Selon cet aspect de l'invention, ledit support comprend un logement pour un ou des récipients tels que décrits précédemment.

Selon différents modes de réalisation de cet aspect de l'invention, qui pourront être pris ensemble ou séparément :
- ledit logement est configuré pour recevoir des récipients dont les premières parties précitées de leurs enceintes ont des sections différentes,
- ledit logement est défini par deux parois latérales sensiblement parallèles et de forme allongée dont les bords longitudinaux arrière sont reliés entre eux par une paroi arrière sensiblement perpendiculaire aux parois latérales, et les bords longitudinaux avant sont libres.

Cet aspect de l'invention concerne encore un dispositif d'alimentation en fluide lave-glace comprenant un support et un récipient tels que décrits précédemment.

Selon encore un autre aspect de l'invention, qui peut être utilisé avec tout ou partie des caractéristiques précédentes, l'invention concerne aussi un réservoir comprenant une ouverture d'alimentation en fluide lave-glace et un couvercle de fermeture.

Ledit couvercle porte un élément en saillie sensiblement coaxial à l'ouverture.

Selon différents modes de réalisation de cet aspect de l'invention, qui pourront être pris ensemble ou séparément :
- ledit élément en saillie est un doigt,
- ledit doigt est sensiblement cylindrique,
- ledit doit comprend une extrémité libre sensiblement en pointe,
- ledit doit est relié au couvercle par des voiles de matière qui ont chacun une orientation sensiblement radiale par rapport à l'axe longitudinal du doigt,
- lesdits voiles de matière sont régulièrement répartis autour de cet axe,
- au moins une partie dudit élément en saillie traverse l'ouverture,
- ledit élément en saillie est formé d'une seule pièce avec le couvercle,
- ledit élément en saillie est rapporté et fixé sur celui-ci,
- ledit couvercle comprend des moyens d'emboîtement sur une partie du réservoir.

Selon cet aspect de l'invention, ledit support comprend un logement pour un ou des récipients tels que décrits précédemment et comporte en outre un réservoir tel que décrit précédemment.

Selon différents modes de réalisation de cet aspect de l'invention, qui pourront être pris ensemble ou séparément :
- ladite ouverture du réservoir débouche dans le logement du ou des récipients,
- ledit couvercle du réservoir forme la base ou partie inférieure du support.

Cet aspect de l'invention concerne encore un dispositif d'alimentation en fluide lave-glace comprenant un support et un récipient tels que décrits précédemment.

Selon différents modes de réalisation de cet aspect de l'invention, qui pourront être pris ensemble ou séparément :
- ledit récipient comprend une ouverture de distribution de fluide qui est équipée de moyens de raccordement à l'ouverture du réservoir,
- lesdits moyens de raccordement sont configurés pour être au moins en partie encastrés dans ladite ouverture,
- lesdits moyens de raccordement du récipient comprennent un élément mobile depuis une première position d'obturation de l'ouverture du récipient jusqu'à une deuxième position de libération de cette ouverture,
- ledit élément en saillie du réservoir du support est configuré pour coopérer et déplacer l'élément mobile depuis sa première à sa deuxième position, lorsque les moyens de raccordement son encastrés dans l'ouverture du réservoir,
- ledit élément mobile est une bille qui est montée prisonnière dans un logement des moyens de raccordement,
- lesdits moyens de raccordement comprennent un bouchon qui est monté au niveau de l'ouverture du récipient,
- ledit bouchon est recouvert d'un opercule amovible.

Selon encore un autre aspect de l'invention, qui peut être utilisé avec tout ou partie des caractéristiques précédentes ledit récipient comprend au moins une cavité configurée pour recevoir des moyens de blocage ou de verrouillage portés par le support.

Selon différents modes de réalisation de cet aspect de l'invention, qui pourront être pris ensemble ou séparément :
- ladite cavité est située sur une partie supérieure du récipient,
- ladite cavité est opposée à une ouverture de distribution de fluide du récipient,
- ladite cavité a une forme générale sensiblement parallélépipédique,
- ladite cavité est formée dans une zone de liaison d'une paroi supérieure à une paroi arrière du récipient,
- ladite cavité est délimitée par deux parois planes sensiblement perpendiculaires entre elles.

Selon cet aspect de l'invention, ledit support comprend un logement pour un ou des récipients tels que décrits précédemment.

Ledit support comprend des moyens de verrouillage configurés pour être au moins en partie engagés dans la cavité du récipient et à prendre appui sur une paroi de cette cavité, en vue du blocage du récipient dans ledit logement.

Selon différents modes de réalisation de cet aspect de l'invention, qui pourront être pris ensemble ou séparément :
- lesdits moyens de verrouillage sont du type à encliquetage élastique,
- lesdits moyens de verrouillage comprennent au moins un crochet,
- ledit crochet est porté par une languette élastiquement déformable,
- lesdits moyens de verrouillage sont localisés sur une partie supérieure du support.

Cet aspect de l'invention concerne encore un dispositif d'alimentation en fluide lave-glace comprenant un support et un récipient tels que décrits précédemment.

Selon différents modes de réalisation de cet aspect de l'invention, qui pourront être pris ensemble ou séparément, ladite cavité du récipient coopère avec lesdits moyens de verrouillage du support pour bloquer le récipient dans le logement du support.

Enfin, l'invention concerne un système de lavage de pare-brise de véhicule comprenant un dispositif d'alimentation en fluide lave-glace tel que décrit précédemment, des moyens d'aspersion du pare-brise avec ledit fluide et des moyens d'essuyage du pare-brise.

L'invention sera mieux comprise, et d'autres buts, détails, caractéristiques et avantages de celle-ci apparaîtront plus clairement au cours de la description explicative détaillée qui va suivre, d'au moins un mode de réalisation de l'invention donné à titre d'exemple purement illustratif et non limitatif, en référence aux dessins schématiques annexés.

Sur ces dessins :
- les figures 1 à 6 concernent un premier mode de réalisation de l'invention, dans lesquelles :
   - la figure 1 est une vue en perspective d'un support
   - la figure 2 est une vue en perspective et en coupe de la partie basse du support de la figure 1, un récipient étant en cours de montage ou de démontage,
   - la figure 3 est une vue en perspective d'un récipient,
   - les figures 4 et 5 sont des vues schématiques en perspective de deux modes de réalisation particuliers du récipient comprenant deux compartiments indépendants,
   - la figure 6 est une vue en perspective d'un dispositif dans lequel des moyens de détrompage sont représentés,
- les figures 7 à 17 concernent un second mode de réalisation dans lesquelles :
   - les figures 7a et 7b sont des vues en perspective de deux récipients, vus de l'avant et de côté,
   - la figure 8 est une vue en perspective du récipient de la figure 7a, vu de l'arrière et de côté,
   - la figure 9 est une vue en perspective du récipient de la figure 7a, vu de dessus,
   - la figure 10 est une vue en perspective d'un support, vu de l'arrière et de côté,
   - la figure 11 est une vue en perspective éclatée du support de la figure 10, vu de l'avant et de côté,
   - les figures 12 et 13 sont des vues en perspective des moyens de raccordement du récipient au support de la figure 10,
   - la figure 14 est une vue en coupe des moyens de raccordement des figures 12 et 13,
   - la figure 15 est une vue en perspective d'une base formant couvercle du support de la figure 10,
   - les figures 16 et 17 sont des vues en coupe d'un dispositif selon l'invention et montrent des moyens d'identification et de lecture,
- les figures 18 à 25 concernent un mode de réalisation de l'invention, dans lesquelles :

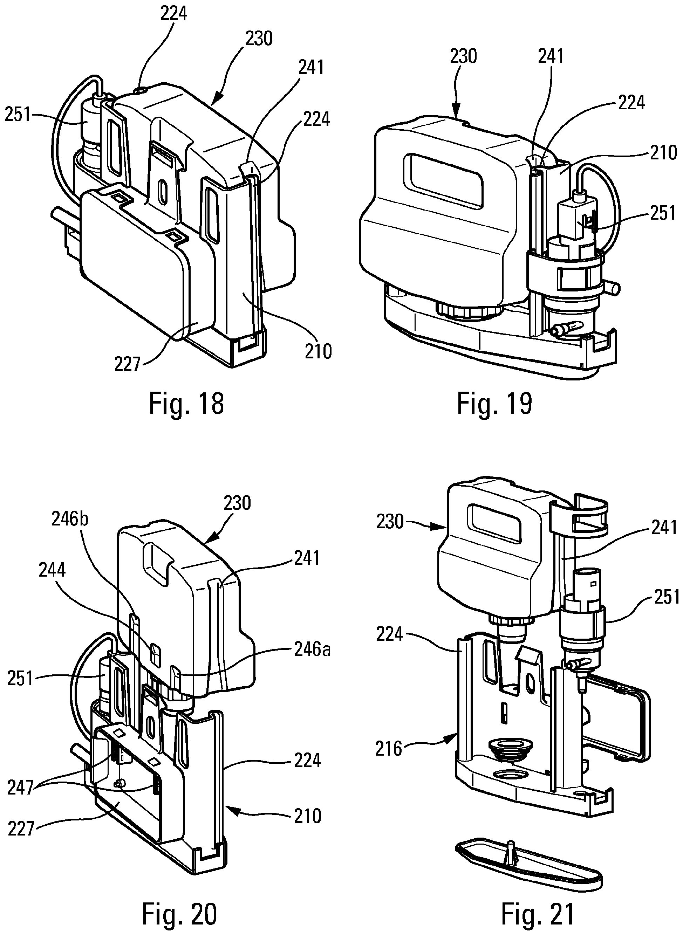

   - la figure 18 est une vue en perspective d'un dispositif selon l'invention, vu de l'arrière et de côté,
   - la figure 19 est une vue en perspective du dispositif de la figure 18, vu de l'avant et de côté,
   - les figures 20 et 21 sont d'autres vues en perspective et partiellement éclatées du dispositif de la figure 18,

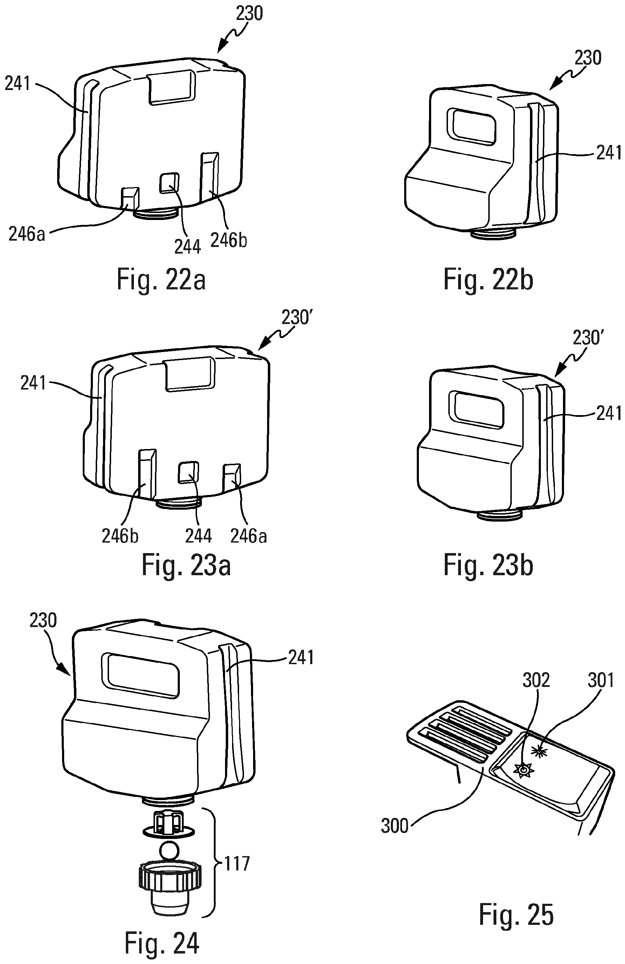

   - les figures 22a et 22b sont des vues en perspective d'un récipient selon l'invention,
   - les figures 23a et 23b sont des vues en perspective d'un autre récipient selon l'invention,
   - la figure 24 est une vue en perspective éclatée d'un récipient et de ses moyens de raccordement, et
   - la figure 25 est une vue en perspective d'un moyen d'affichage et d'activation du dispositif selon l'invention, localisé dans l'habitacle d'un véhicule.

Comme illustré dans les différentes figures, l'invention concerne tout d'abord un support 10 pour récipient de fluide lave-glace 30. Ledit support 10 est configuré pour être fixé à un véhicule. Il comprend un logement 11 qui est configuré pour autoriser une mise en place et une extraction répétées du ou des dits récipients 30. L'utilisateur pourra ainsi changer de récipient 30 autant de fois que souhaité.

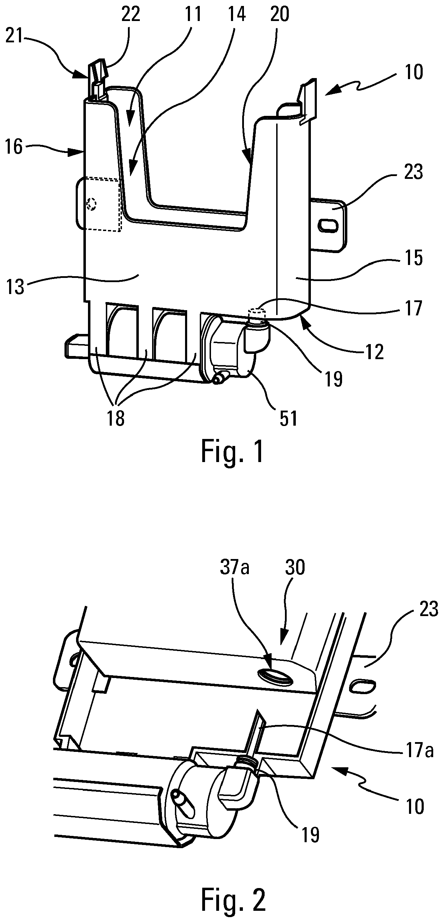

Le logement décrit dans la figure 1 est de forme parallélépipédique, il peut avoir tout autre forme du moment qu'il soit apte à loger un récipient et que cette forme soit adaptée à la forme du récipient et à son maintien dans le logement. Il comprend une paroi inférieure 12, une paroi avant 13 et une paroi arrière 14 et deux côtés opposés 15 et 16, de manière à former ledit logement 11. Les parois avant et arrière 13, 14 et/ou les côtés opposés 15, 16 sont issus de ladite paroi arrière 14. Les côtés opposés 15 et 16 relient les parois avant et arrière 13 et 14.

La paroi avant 13 et/ou la paroi arrière 14 sont munies d'une encoche 20 laissant voir le récipient et/ou permettant sa manipulation.

Le support 10 est configuré pour être fixé au véhicule, sa fixation est ici assurée par des brides percées 23, situées de chaque côté du support 10 et dans le même plan de la paroi arrière 14 du support. Ces moyens de fixation ne sont donnés qu'à titre illustratif. Tout autre moyen ou tout autre emplacement est possible.

Ledit support 10 pourra encore comprendre des moyens de verrouillage du récipient 30 dans ledit logement 11, notamment par encliquetage. Lesdits moyens de verrouillage comprennent ici une languette flexible 21, terminée par un crochet 22, issue de l'une et/ou l'autre des extrémités supérieures desdits côtés opposés 15, 16.

La paroi inférieure 12 comprend avantageusement des moyens de raccordement 17 qui permettent la liaison entre le récipient 30 et un circuit de fluide lave-glace. Le circuit comprend une pompe 51 et un ensemble de conduits (non-représentés) reliant la pompe 51 aux moyens d'aspersion. Il est possible de relier le récipient 30 directement à la pompe 51. Dans ce cas, le support 10 comprend un moyen de fixation 18 qui permet de fixer la pompe sur le support. Il est aussi possible que le récipient 30 soit relié au circuit, en particulier à ladite pompe, par l'intermédiaire d'un conduit 19 des moyens de raccordement 17.

Les moyens de raccordement 17 peuvent être configurés pour permettre une ouverture automatique du récipient, tel qu'un perçage du fond du récipient par une extrémité en biseau 17a dudit conduit 19.

Comme illustré dans les différentes figures 1 à 6, l'invention concerne également le récipient 30 de fluide lave-glace, configuré de manière à être monté sur le support 10 décrit précédemment. Il est amovible et interchangeable. Il peut, ainsi, être mis en place, extrait puis remplacé par un autre récipient 30 de manière répétée par l'utilisateur en fonction de ses besoins et autant de fois que nécessaire.

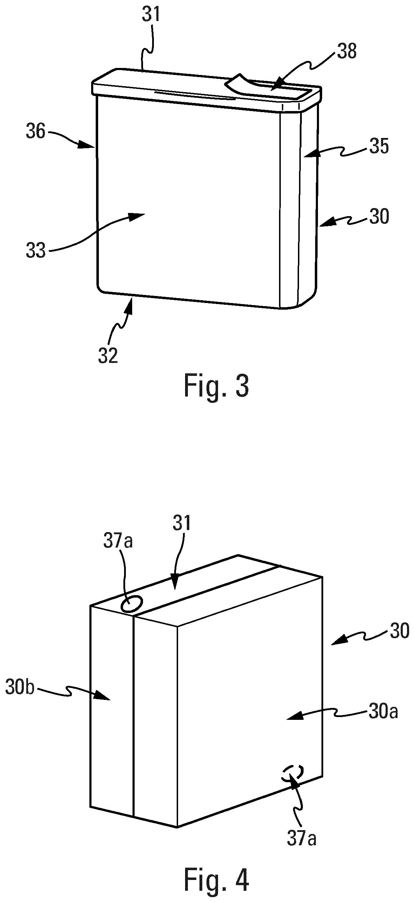

Le récipient 30 illustré à la figure 3 est de forme parallélépipédique, il peut avoir toute autre forme du moment que celle-ci soit adaptée à la forme du support 10 et que le récipient puisse s'insérer dans le logement 11 de celui-ci. Il comprend une paroi supérieure 31, une paroi inférieure 32, une paroi avant 33, une paroi arrière 34 et deux côtés opposés 35 et 36.

Le récipient 30 comprend au moins une ouverture 37. L'ouverture 37 située sur la paroi inférieure est dite première ouverture 37a. Cette ouverture 37a est apte à coopérer avec les moyens de raccordement 17 situés sur le support 10. Cette ouverture 37a permet la distribution du fluide lave-glace vers le circuit.

Le récipient 30 peut également comprendre une deuxième ouverture 37b située sur la paroi supérieure 31 du récipient 30. Celle-ci sert à maintenir une pression à l'intérieur du récipient 30 identique à la pression atmosphérique. Ainsi, cette seconde ouverture 37b peut être nécessaire dans le cas d'un récipient 30 rigide pour faciliter la sortie du fluide lave-glace de celui-ci. En revanche, dans le cas d'un récipient 30 souple, cette seconde ouverture 37b est facultative, le récipient pouvant se déformer pour permettre la sortie du fluide vers le circuit. Dans le cas d'un récipient 30 souple, il est alors possible de concevoir un récipient avec une seule première ouverture 37a.

Les ouvertures 37a et 37b peuvent comprendre des moyens de fermeture 38. Il peut s'agir d'opercules. Ces opercules seront notamment configurés pour pouvoir refermer les ouvertures 37, en particulier la première ouverture 37a, après extraction du récipient 30 hors du support 10. Les récipients ainsi extraits peuvent être refermés pour assurer un meilleur stockage jusqu'à la prochaine utilisation du récipient, en particulier dans le cas où ils ont été retirés alors qu'ils ne sont pas encore vides. On évite ainsi une détérioration ou des fuites du fluide lave-glace.

Les moyens de fermeture 38 peuvent être choisis, de manière non-limitative et à titre d'exemple, parmi les autocollants, les membranes, les bouchons ou les valves souples. Dans le cas d'un récipient 30 avec plusieurs ouvertures 37, les moyens de fermeture 38 peuvent être identiques ou une combinaison des moyens listés ci-dessus.

Le récipient 30 selon l'invention est avantageusement pré-rempli d'un fluide lave-glace. Il peut s'agir, par exemple, d'un liquide dégivrant, d'un liquide nettoyant ou d'un liquide anti-insecte. L'utilisateur choisit ainsi le liquide souhaité pour pouvoir nettoyer efficacement son pare-brise.

Selon un aspect de l'invention, ledit récipient 30 est jetable après utilisation du liquide. Autrement dit, ledit récipient 30 n'est pas destiné à être rempli à nouveau après utilisation de la quantité de liquide pré-rempli. Il comprend ainsi soit une seule première ouverture 37a, servant à sa vidange, soit une première et une deuxième ouverture. Dans le cas de la présence d'une seconde ouverture 37b, servant à sa mise à la pression atmosphérique, il pourra s'agir d'un simple orifice d'évent, de diamètre réduit, trop faible pour autoriser son remplissage.

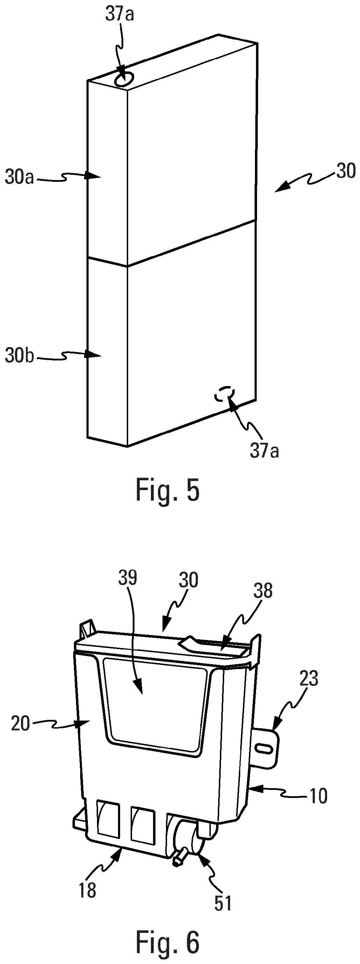

Dans un mode particulier de réalisation du récipient 30, représenté dans les figures 4 et 5, le récipient comprend deux compartiments indépendants 30a et 30b. Il est ainsi possible d'avoir deux fluides lave-glace différents, dont un est en cours d'utilisation et l'autre en attente. Chacun des compartiments comprend au moins une première ouverture 37a. Les premières ouvertures 37a sont, de préférence, opposées l'une à l'autre, de telle sorte que le fluide en attente d'utilisation ne pèse pas avec la gravité sur la première ouverture 37a du compartiment correspondant.

La figure 6 représente le dispositif selon l'invention comprenant un support 10, un récipient 30 et une pompe 51. La paroi avant 13 du support 10, ainsi que la paroi avant 33 du récipient 30 comprennent des moyens de détrompage 20 et 39. Comme représenté, les moyens de détrompage 20 de la paroi avant 13 peuvent notamment prendre la forme d'une encoche configurée de telle sorte que le moyen de détrompage du récipient 39, ici un sticker d'une couleur particulière avec un texte et un dessin représentatifs, est visible, en particulier à travers ladite encoche 20. Les moyens de détrompage du récipient 30 peuvent être, de manière non limitative et à titre d'exemple, une forme particulière, une étiquette, un sticker, un texte, un dessin ou une couleur. L'utilisateur peut ainsi facilement visualiser le type de fluide contenu dans le récipient/le compartiment en cours d'utilisation.

Bien évidemment tout autre moyen de détrompage peut être envisagé tel que des formes complémentaires appartenant respectivement au support et au récipient et destinées à s'emboîter l'une dans l'autre lorsque le récipient approprié est monté sur le support.

Il est à noter que des variantes de réalisation sont bien sûr possibles. Notamment, il est possible, dans un mode de réalisation supplémentaire, que le logement 11 soit apte à recevoir un récipient 30 à double compartiments 30a et 30b. Dans ce mode de réalisation, le logement 11 sera d'une taille et d'une forme adaptées au récipient et comprendra des moyens de raccordement pour mettre en communication le compartiment en cours d'utilisation avec le circuit de fluide lave-glace. Les éventuels moyens de détrompage 20 et 39 permettront de rendre visible le compartiment en cours d'utilisation.

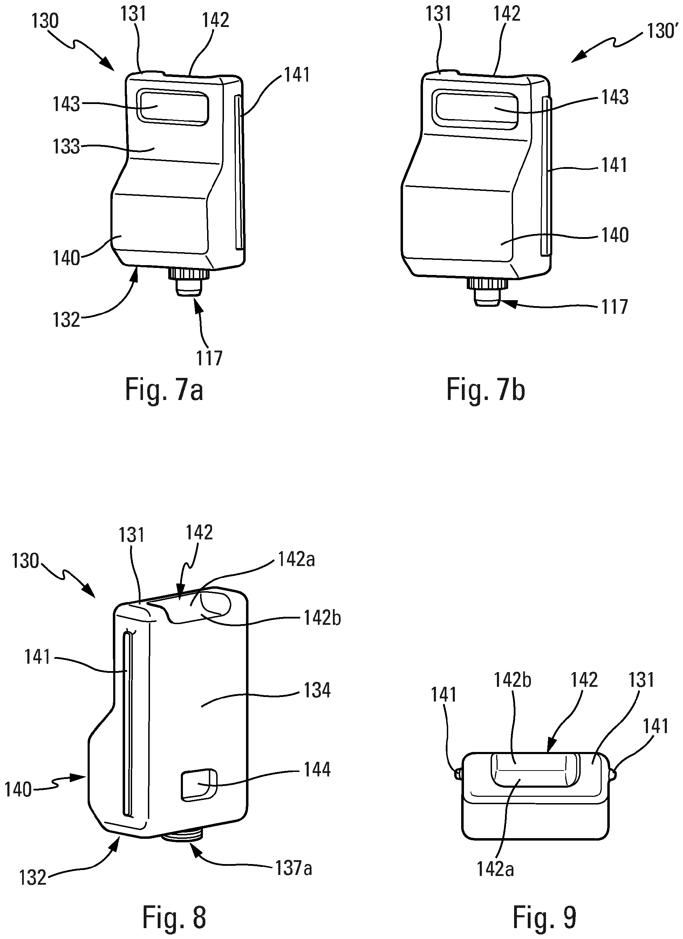

Dans une variante de réalisation représentée aux figures 7 à 17, le support 110 comprend un logement 111 formé d'une paroi inférieure, d'une paroi arrière 114 et de deux côtés opposés 115 et 116. Dans cette variante, le support 110 ne comporte pas de paroi avant, ce qui permet de monter plusieurs types de récipient 130 dans le logement 111 et en particulier des récipients ayant des formes et des volumes internes différents.

Les figures 7a, 8 et 9 représentent un type de récipient 130 et la figure 7b représente un autre type de récipient 130', les contenances et les formes de ces récipients 130, 130' étant différentes.

Chaque récipient 130, 130' comprend une paroi supérieure 131, une paroi inférieure 132, une paroi avant 133, une paroi arrière 134 et deux côtés opposés.

Le récipient 130 comprend au moins une ouverture, dite première ouverture 137a, située sur la paroi inférieure 132. Celle-ci est destinée à être équipée de moyens 117 de raccordement au support 110. L'ouverture 137a permet la distribution du fluide lave-glace ou de lavage vers le circuit. L'ouverture 137a peut comprendre un moyen de fermeture tel qu'un opercule, en particulier lorsque le récipient 130 n'a pas encore été utilisé. Cet opercule est destiné à être percé lors de la mise en place du récipient 130 sur le support 110, par exemple.

Le récipient 130, 130' comprend en outre un ventre ou renflement 140 qui permet d'ajuster sa contenance. Ce renflement 140 est ici localisé en partie inférieure du récipient 130. Plus précisément, la paroi avant 133 du récipient comprend une partie inférieure et une partie supérieure, qui sont sensiblement parallèles et qui sont reliées l'une à l'autre par une partie inclinée, la partie inférieure étant en avant de la partie supérieure. Du fait de ce renflement 140, l'enceinte interne définie par le récipient n'a pas la même section en partie inférieure et en partie supérieure. Plus le renflement du récipient est important et plus la contenance du récipient est importante. Le récipient 130' de la figure 7b a un renflement plus important que celui 130 de la figure 7a et a donc une contenance plus importante (volume interne de 1,5L pour le récipient 130' contre 1,2L pour le récipient 130). Le renflement 140 peut varier en fonction du type de fluide contenu. Ainsi, pour un fluide très utilisé et/ou nécessitant une plus grande quantité de produit pour être efficace, tel qu'un liquide dégivrant, le renflement 140 sera plus important que pour un fluide moins utilisé et/ou nécessitant une quantité plus faible, tel qu'un liquide anti-insecte. La différence de taille permet également de différencier les types de liquide et de connaître le type de liquide en cours d'utilisation.

Dans une autre variante de réalisation non représentée, au moins l'un des récipients peut comprendre un creux au lieu d'un ventre. C'est par exemple le cas lorsque le fluide contenu dans le récipient est utilisé en très faible quantité et qu'un récipient à faible contenance est suffisant pour ce fluide.

Le récipient 130 peut également comprendre des moyens de guidage 141 destinés à coopérer avec des moyens de guidage 124 complémentaires du support. Les moyens de guidage 141 comprennent ici des nervures rectilignes et parallèles localisées sur les côtés du récipient 130, sur sensiblement toute la hauteur de ceux-ci. De telles nervures forment des rails de guidage.

Le récipient 130 peut également comprendre un renfoncement ou une cavité, dite première cavité 142, localisée dans la zone de liaison des parois supérieure 131 et arrière 134 du récipient. Il s'agit ici d'une cavité sensiblement parallélépipédique, qui est configurée pour coopérer avec des moyens de verrouillage 122 du support 110, qui seront décrits plus en détail dans ce qui suit. La cavité 142 a une largeur ou dimension transversale inférieure à celle du récipient 130 et est sensiblement formée au milieu de la zone de liaison précitée. La cavité 142 est ici délimitée par deux parois sensiblement perpendiculaires, une paroi verticale 142a et une paroi horizontale 142b, le bord inférieur de la paroi verticale 142a étant relié au bord avant de la paroi horizontale 142b.

Le récipient 130 peut également comprendre un renfoncement ou une cavité, dite deuxième cavité 143, sur la partie supérieure de la paroi avant 133. Il s'agit, ici, d'une cavité sensiblement parallélépipédique. Elle a une largeur ou dimension transversale inférieure à celle du récipient et est sensiblement formée au milieu de la paroi avant 133. Cette deuxième cavité 143, et éventuellement la première cavité 142, forment des moyens de préhension du récipient 130 lors de son montage et/ou démontage. De façon avantageuse, la taille des deux cavités sera suffisante pour que l'utilisateur puisse y loger des doigts d'une main pour le montage et/ou le démontage du récipient 130. Les moyens de préhension du récipient sont ainsi situés à l'extrémité du récipient opposée à son ouverture 137a.

Le récipient 130 peut également comprendre une ou des cavités sur la partie inférieure de la paroi arrière 134, dite troisième cavité 144, comme représenté dans la figure 8. Le récipient comprend ici une seule troisième cavité 144 de plus petite dimension que les autres cavités 142, 143 et qui est configurée pour loger des moyens d'identification 145 du récipient, comme cela sera décrit plus en détail dans ce qui suit.

Pour insérer et maintenir le récipient 130 en place en toute sécurité dans le logement 111 du support 110, le support 110 comprend des moyens de verrouillage 121,122 et des moyens de guidage 124. Les moyens de verrouillage comprennent une languette flexible 121 terminée par un crochet 122, cette languette 121 s'étendant vers le haut depuis la paroi arrière 114 du support 110, sensiblement dans le prolongement de cette paroi. Le crochet 122 est apte à coopérer avec la paroi horizontale 142b de la première cavité 142 du récipient.

Le crochet 122 se positionne dans la cavité 142 et prend appui sur la paroi horizontale 142b de celle-ci, évitant ainsi tout mouvement du récipient 130. Cela garantit une bonne mise en place du récipient 130 ainsi qu'une bonne étanchéité au niveau des moyens de raccordement 117 entre le récipient et le support, par l'application d'une légère force sur le récipient par le crochet. De plus, la première cavité 142 permet également de placer le crochet 122 plus bas que si celui-ci devait se positionner directement sur la paroi supérieure 131 du récipient 130. Ainsi, le crochet 122 ne dépasse pas ou peu en hauteur du récipient 130, ce qui évite que le crochet soit encombrant et ce qui facilite donc le logement et la fixation du support 110 dans le véhicule. De façon avantageuse, la localisation de la première cavité 142 est dépendante de la localisation du ou des moyens de verrouillage. Il est également possible d'avoir plusieurs cavités 142 en fonction du nombre de moyens de verrouillage.

En variante, les moyens de verrouillage 121, 122 peuvent être réglables de manière à s'adapter à différente taille et notamment différentes hauteurs de récipient.

Les moyens de guidage 124 du support 110 sont configurés pour coopérer avec les moyens de guidage 141 complémentaires du récipient 130. Les moyens de guidage 124 du support 110 sont ici des rainures formées sur les côtés 115, 116 du support 110, ces rainures étant sensiblement rectilignes et ayant une orientation sensiblement verticale en position d'utilisation du support. Comme expliqué dans ce qui précède, les moyens de guidage 141 du récipient comprennent des nervures complémentaires (figures 7a à 9).

Le support 110 peut également comprendre des moyens 118 de fixation d'une pompe 151 au support 110. Dans l'exemple représenté, la pompe 151 est fixée sur un des côtés 116 du support 110 au moyen d'une bague qui enserre la pompe et qui est fixée de manière amovible par des moyens appropriés, tels que des crochets, à des moyens complémentaires du côté du support 110.

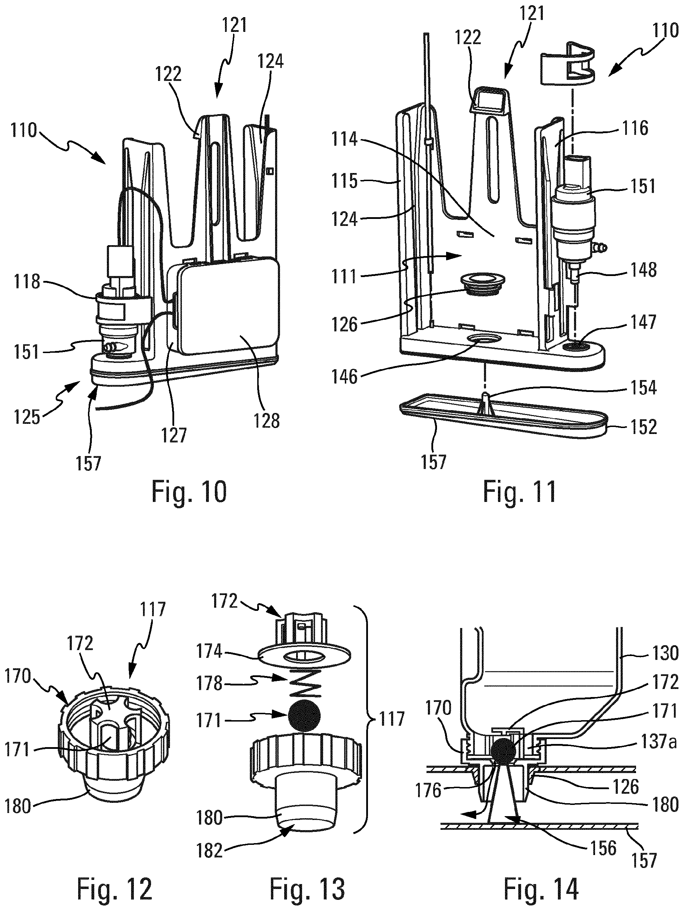

Le support 110 comprend une base 125 qui comprend un réservoir interne 157, ce réservoir étant fermé de manière étanche par un couvercle 152 qui est fixé par des moyens d'emboîtement 153 sur la partie supérieure de la base 125. Le réservoir 157 est destiné à être alimenté en fluide par le récipient 130 et à distribuer du fluide à la pompe 151. Le réservoir 157 est donc en communication fluidique avec le récipient et la pompe. Des premiers moyens de raccordement 117 sont prévus entre l'ouverture de distribution 137a du récipient 130 et une ouverture 146 d'alimentation du réservoir 157, et des seconds moyens de raccordement 148 sont prévus entre une ouverture de distribution 147 du réservoir et une entrée de la pompe 151 (figure 11).

Pour assurer l'étanchéité entre les moyens de raccordement 117 et le réservoir 157, un joint 126 est monté dans l'ouverture 146 du réservoir et est destiné à être légèrement comprimé entre le réservoir et les moyens de raccordement 117. Un autre joint peut être monté dans l'ouverture 147 du réservoir destinée à être raccordée à l'entrée de la pompe 151.

Dans l'exemple représenté, les moyens de raccordement 117 comprennent un bouchon 170 qui est fixé sur un goulot du récipient 130, au niveau de son ouverture 137a, par exemple par vissage. Le bouchon 170 peut être fixé à demeure sur le récipient. Le bouchon comprend un élément mobile, ici une bille 171, qui est monté prisonnier dans un logement, ici une cage 172 du bouchon 170.

Le bouchon 170 comprend une paroi transversale 174 portant la cage 172 et comportant un orifice central 176, cet orifice central ayant un diamètre inférieur à celui de la bille 171 et étant conformé pour former un siège à cette bille 171. La bille 171 est déplaçable à l'intérieur de sa cage 172 entre une position dans laquelle elle prend appui sur le siège et obture l'orifice 176, et une position dans laquelle elle est à distance du siège et laisse ainsi libre l'orifice 176, qui communique alors avec l'ouverture 137a du récipient 130. Des moyens de rappel, tels qu'un ressort 178 sont montés dans la cage 172 et sollicitent la bille 171 dans la position d'obturation de l'orifice 176.

Le bouchon 170 comprend en outre un rebord cylindrique 180 d'emboîtement dans l'ouverture 146 du réservoir 157. Comme cela est schématiquement représenté en figure 14, le couvercle 152 du réservoir porte un élément en saillie 154 qui est ici un doigt ou un percuteur 156, qui est destiné à prendre appui sur la bille 171 et à la déplacer lors de l'emboîtement précité. En position d'emboîtement, le percuteur 156 est engagé dans le rebord 180 et son extrémité libre prend appui sur la bille 171 et l'éloigne de son siège. Le fluide contenu dans le récipient 130 peut alors passer à travers l'orifice 176 du bouchon jusque dans le réservoir 157 (figure 14).

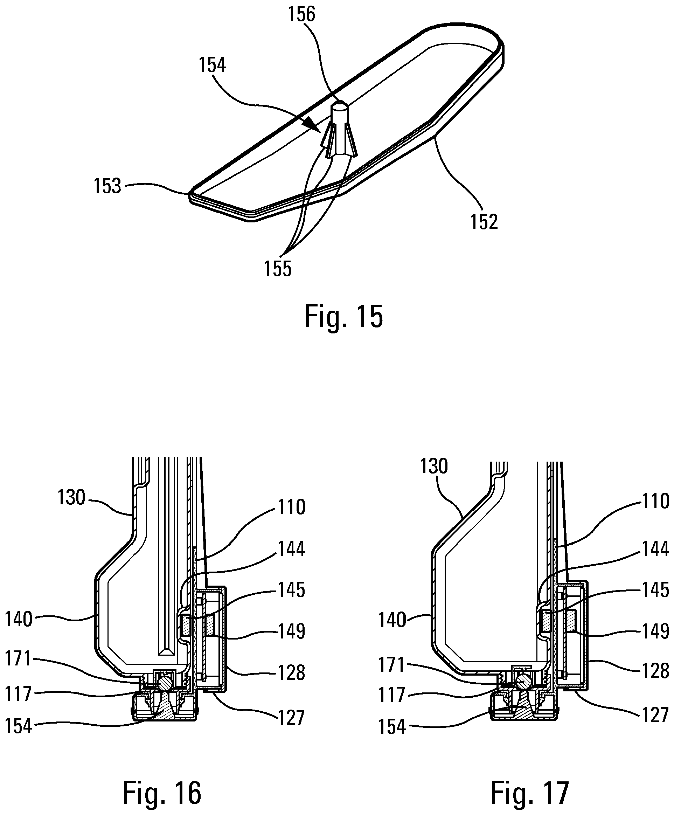

Le percuteur 156 est mieux visible en figure 15. Il a une forme générale cylindrique dont l'extrémité supérieure libre est sensiblement en pointe. Il est relié au couvercle 152 par des voiles de matière 155 qui ont chacun une orientation sensiblement radiale par rapport à l'axe longitudinal du doigt et qui sont régulièrement répartis autour de cet axe. Ces voiles 155 forment des lames destinées à fendre l'opercule 182 précité qui peut recouvrir l'extrémité libre du rebord cylindrique 180 du bouchon 170, lors du montage du récipient sur le support (figure 13). Ces voiles sont ici au nombre de quatre. Le percuteur 156 peut être issu de matière avec le couvercle 152 ou une pièce rapportée et fixée sur le couvercle.

Un seul déplacement en translation du récipient 130 vis-à-vis du réservoir 157, jusqu'à l'emboîtement du bouchon 170 dans l'ouverture 146 du réservoir, suffit à établir une communication fluidique entre le récipient et le réservoir.

Les figures 16 et 17 montrent les moyens d'identification 145 portés par le récipient 130 et évoqués ci-dessus. Ces moyens d'identification 145 permettent à un système de gestion (non représenté) notamment de connaître le type de fluide de lavage en cours d'utilisation. Ils peuvent également être reliés au circuit de fluide de lavage, en particulier à la pompe 151, pour détecter, par exemple, le nombre de cycles d'utilisation et déterminer le moment auquel le récipient 130 est vide et doit être remplacé. Les moyens d'identification 145 peuvent également permettre d'identifier la conformité du récipient 130, et de détecter une éventuelle contrefaçon.

Les moyens d'identification 145 peuvent être logés dans la troisième cavité 144 précitée du récipient 130 et peuvent être protégés par un moyen de fermeture de ladite troisième cavité 144, telle qu'une étiquette adhésive. En variante, le récipient peut porter une étiquette de support des moyens d'identification, le récipient n'a alors pas forcément besoin d'une troisième cavité, à moins que les moyens d'identification soient relativement épais et qu'il soit préférable de les protéger en les logeant dans cette cavité.

Dans l'exemple représenté, les moyens d'identification sont destinés à être détectés à distance par des moyens de lecture 149 portés par le support 110. Comme cela est visible dans les figures 16 et 17, en position de montage d'un récipient dans le logement du support, les moyens d'identification 145 sont positionnés sensiblement en regard des moyens de lecture 149 mais peuvent être séparés les uns des autres par une paroi du support telle que sa paroi arrière 114, qui ne gêne toutefois pas l'identification du récipient. Les moyens de lecture 149 sont ici logés dans un boîtier électronique 127 fixé à l'arrière du support. Ce boîtier 127 est fermé de manière étanche par un couvercle 128 amovible. Dans un exemple particulier de réalisation de l'invention, les moyens d'identification 145 comprennent un transpondeur et les moyens de lecture 149 sont aptes à lire le code de ce transpondeur.

Le boîtier 127 peut en outre comprendre des moyens qui sont reliés par des câbles électriques à la pompe 151 en vue de la commander (figure 10).

Les figures 18 à 25 représentent une autre variante de réalisation du dispositif selon l'invention.

Cette variante de réalisation diffère de celle précédemment décrite notamment en ce que les moyens de guidage 224, 241 du récipient 230 et du support 210 sont différents, et les moyens d'identification 246a,b et de lecture 247 sont différents. Le dispositif selon l'invention comprend pour l'essentiel toutes les autres caractéristiques décrites dans ce qui précède, pour autant qu'elles soient conformes aux dessins.

Les moyens de guidage 224 portés par le support 210 comprennent des nervures rectilignes qui sont sensiblement verticales et s'étendent sur toute la hauteur du support, sur ses côtés. Les moyens de guidage 241 portés par le récipient 230 comprennent des rainures, qui sont situées sur les côtés du récipient et sont sensiblement complémentaires aux nervures de guidage du support.

Les moyens d'identification sont de type mécanique et sont, ici sous la forme de deux cavités supplémentaires situées sur la paroi arrière du récipient 230, dites quatrièmes cavités 246, configurées pour coopérer avec des moyens de lecture 247 par contact situés à l'arrière du support 210, et logés dans un boîtier électronique 227 du type précité. Ces quatrièmes cavités 246 sont situées de part et d'autre de la troisième cavité 244 précitée. Elles ont chacune une forme générale rectangulaire et ont des hauteurs différentes, l'une étant courte 246a et l'autre étant longue 246b. Ainsi, pour un type de récipient 230 et de liquide de lavage donné, la cavité courte 246a est d'un côté donné (figures 22a et 22b) et pour un autre type de récipient 230' et liquide, la cavité courte 246a est située de l'autre côté (figures 23a et 23b). Les récipients 230, 230' ont en outre des renflements de tailles différentes, comme expliqué dans ce qui précède. Les moyens de lecture 247, qui sont de type interrupteur, comprennent chacun au moins un pion mobile entre une position rentrée et une position sortie. Lorsque les moyens de lecture sont situés en regard d'une cavité longue 246b, le pion correspondant est en position sortie et est engagé dans cette cavité. Lorsque les moyens de lecture sont situés en regard d'une cavité courte 246a, le pion correspondant est en position rentrée et est en appui sur la paroi arrière du récipient. Lors de la mise en place du récipient 230 dans le support 210, les moyens de lecture 247 sont ainsi aptes à identifier une information relative au récipient et à émettre un signal correspondant à destination du système de gestion précité.

Ainsi, si un récipient non muni de ces cavités est placé sur un support, le système de gestion peut bloquer par exemple le fonctionnement de la pompe de manière à ne pas délivrer le fluide contenu dans ledit récipient au système de lavage du véhicule.

De même, les informations identifiées par les moyens d'identification peuvent être transmises à un dispositif d'affichage de ces informations dans l'habitacle du véhicule. La figure 25 représente un bouton 300 qui peut être localisé dans l'habitacle et qui peut par exemple comprendre deux voyants lumineux 301, 302 correspondant chacun à un type de liquide de lavage, c'est-à-dire à un type de réservoir monté sur le support du dispositif de lavage. Le voyant 301 peut signifier qu'un récipient contenant du liquide antigivre est monté sur le support et le voyant 302 peut signifier qu'un récipient contenant du liquide anti-insecte est monté sur le support, ces voyants se présentant sous la forme de dessins représentatifs par exemple. Chacun des voyants peut être activé grâce aux informations (le type de fluide contenu dans le récipient, le niveau de fluide dans le récipient, la quantité de fluide déjà utilisé, l'intérêt d'utiliser le fluide du récipient pour le lavage du pare-brise, compte tenu de la température ambiante par exemple, etc.) provenant des moyens de lecture 247 ou des moyens d'identification 145 précédemment décrit et du système de gestion. Ce bouton 300 peut être un bouton, de commande, qui peut être utilisé pour activer le dispositif d'alimentation en fluide et notamment sa pompe 251.

Quel que soit le mode de réalisation, l'invention qui vient d'être décrite trouvera une application préférée dans les systèmes de lavage de pare-brise pour véhicule à moteur.

## Revendications

1. Récipient (130) de fluide lave-glace amovible et interchangeable, configuré pour être monté dans un support (110) de fixation à un véhicule, comprenant des moyens d'identification (145, 246a, 246b) configurés pour être détectés par des moyens de lecture (149, 247) portés par le support, les moyens d'identification (145) comprenant au moins une cavité destinée à coopérer avec des moyens de lecture (247) de préférence de type interrupteur porté par le support, **caractérisé en ce que** les moyens d'identification (145) comprennent deux cavités de dimension différentes destinées à coopérer chacune avec des moyens de lecture (247) de préférence de type interrupteur porté par le support.

2. Récipient (130) selon la revendication 1, **caractérisé en ce que** les moyens d'identification (145) sont configurés pour être détectés avec ou sans contact par les moyens de lecture (149).

3. Récipient (130) selon la revendication 1 ou 2, **caractérisé en ce que** les moyens d'identification (145) comprennent un transpondeur.

4. Récipient (130) selon l'une des revendications 1 à 3, **caractérisé en ce qu'**il comprend sur une de ses parois un évidement ou une cavité (144) de logement des moyens d'identification (145).

5. Récipient (130) selon l'une quelconque des revendications 1 à 4, **caractérisé en ce que** les moyens d'identification (145) sont recouverts ou portés par une étiquette.

6. Support (110) pour récipient de fluide lave-glace amovible et interchangeable, ledit support étant configuré pour être fixé à un véhicule et comprenant un logement (111) pour un ou des récipients (130) selon l'une quelconque des revendications 1 à 5, **caractérisé en ce qu'**il comprend des moyens de lecture (149, 247) configurés pour détecter des moyens d'identification (145, 246a, 246b) portés par le ou les récipients (110).

7. Support (110) selon la revendication 6, **caractérisé en ce que** les moyens de lecture (149, 247) sont configurés pour détecter avec ou sans contact les moyens d'identification (145, 246a, 246b).

8. Support (110) selon la revendication 6 ou 7, **caractérisé en ce que** les moyens de lecture (149) sont configurés pour lire le code d'un transpondeur.

9. Support (110) selon l'une quelconque des revendications 6 à 38, **caractérisé en ce qu'**il comprend un boîtier électronique (127) de logement des moyens de lecture (149).

10. Support selon l'une quelconque des revendications 6 à 9, **caractérisé en ce que** les moyens de lecture (247) sont de type interrupteur, et comprennent au moins un pion mobile entre une position rentrée et une position sortie.

11. Dispositif d'alimentation en fluide lave-glace, **caractérisé en ce qu'**il comprend un récipient (130) selon l'une quelconque des revendications 1 à 5 et un support (110) selon l'une quelconque des revendications 6 à 10.

12. Dispositif selon la revendication 11, **caractérisé en ce que**, en position de montage du récipient (130) dans le logement (111) du support (110), les moyens d'identification (145, 246a, 246b) et de lecture (149, 247) sont en regard les uns des autres, et peuvent être séparés les uns des autres par une paroi du récipient et/ou une paroi du support.

13. Système de lavage de pare-brise de véhicule, **caractérisé en ce qu'**il comprend un dispositif d'alimentation en fluide lave-glace selon la revendication 11 ou 12, des moyens d'aspersion du pare-brise avec ledit fluide et des moyens d'essuyage du pare-brise.

14. Véhicule, **caractérisé en ce qu'**il comprend un système de lavage de pare-brise de véhicule selon la revendication 13, **caractérisé en ce qu'**il comprend en outre, dans l'habitacle, des moyens d'affichage d'informations relatives au récipient.

15. Procédé de commande du système de lavage de pare-brise d'un véhicule selon la revendication 13, **caractérisé en ce qu'**il comprend une étape d'identification du ou des récipients dans le logement du support.

16. Procédé selon la revendication 15, **caractérisé en ce qu'**il comprend une étape de transmission d'une information relative au récipient, à l'habitacle du véhicule.

17. Procédé selon la revendication 16, **caractérisé en ce que** l'information transmise comprend une ou plusieurs des informations suivantes : le type de fluide contenu dans le récipient, le niveau de fluide dans le récipient, la quantité de fluide déjà utilisé, et l'intérêt d'utiliser le fluide du récipient pour le lavage du pare-brise.

## Patentansprüche

1. Abnehmbarer und austauschbarer Behälter (130) für Scheibenreinigungsflüssigkeit, welcher dafür ausgelegt ist, in einem Träger (110) zur Befestigung an einem Fahrzeug angebracht zu werden, und Identifizierungsmittel (145, 246a, 246b) umfasst, die dafür ausgelegt sind, von Lesemitteln (149, 247) erkannt zu werden, die von dem Träger getragen werden, wobei die Identifizierungsmittel (145) mindestens einen Hohlraum umfassen, der dazu bestimmt ist, mit Lesemitteln (247), vorzugsweise vom Typ eines von dem Träger getragenen Schalters, zusammenzuwirken, **dadurch gekennzeichnet, dass** die Identifizierungsmittel (145) zwei Hohlräume mit unterschiedlichen Abmessungen umfassen, die dazu bestimmt sind, jeweils mit Lesemitteln (247), vorzugsweise vom Typ eines von dem Träger getragenen Schalters, zusammenzuwirken.

2. Behälter (130) nach Anspruch 1, **dadurch gekennzeichnet, dass** die Identifizierungsmittel (145) dafür ausgelegt sind, mit Kontakt oder kontaktlos von den Lesemitteln (149) erkannt zu werden.

3. Behälter (130) nach Anspruch 1 oder 2, **dadurch gekennzeichnet, dass** die Identifizierungsmittel (145) einen Transponder umfassen.

4. Behälter (130) nach einem der Ansprüche 1 bis 3, **dadurch gekennzeichnet, dass** er an einer seiner Wände eine Vertiefung oder einen Hohlraum (144) zur Aufnahme der Identifizierungsmittel (145) umfasst.

5. Behälter (130) nach einem der Ansprüche 1 bis 4, **dadurch gekennzeichnet, dass** die Identifizierungsmittel (145) mit einem Etikett bedeckt sind oder von einem Etikett getragen werden.

6. Träger (110) für einen abnehmbaren und austauschbaren Behälter für Scheibenreinigungsflüssigkeit, wobei der Träger dafür ausgelegt ist, an einem Fahrzeug befestigt zu werden, und eine Aufnahme (111) für einen Behälter oder für Behälter (130) nach einem der Ansprüche 1 bis 5 umfasst, **dadurch gekennzeichnet, dass** er Lesemittel (149, 247) umfasst, die dafür ausgelegt sind, Identifizierungsmittel (145, 246a, 246b) zu erkennen, die von dem oder den Behälter(n) (110) getragen werden.

7. Träger (110) nach Anspruch 6, **dadurch gekennzeichnet, dass** die Lesemittel (149, 247) dafür ausgelegt sind, die Identifizierungsmittel (145, 246a, 246b) mit Kontakt oder kontaktlos zu erkennen.

8. Träger (110) nach Anspruch 6 oder 7, **dadurch gekennzeichnet, dass** die Lesemittel (149) dafür ausgelegt sind, den Code eines Transponders zu lesen.

9. Träger (110) nach einem der Ansprüche 6 bis 38, **dadurch gekennzeichnet, dass** er ein Elektronikgehäuse (127) zur Aufnahme der Lesemittel (149) umfasst.

10. Träger (110) nach einem der Ansprüche 6 bis 9, **dadurch gekennzeichnet, dass** die Lesemittel (247) vom Typ eines Schalters sind und mindestens einen Stift umfassen, der zwischen einer zurückgezogenen Position und einer vorstehenden Position beweglich ist.

11. Vorrichtung zur Versorgung mit Scheibenreinigungsflüssigkeit, **dadurch gekennzeichnet, dass** sie einen Behälter (130) nach einem der Ansprüche 1 bis 5 und einen Träger (110) nach einem der Ansprüche 6 bis 10 umfasst.

12. Vorrichtung nach Anspruch 11, **dadurch gekennzeichnet, dass** in der Position der Anbringung des Behälters (130) in der Aufnahme (111) des Trägers (110) die Identifizierungsmittel (145, 246a, 246b) und die Lesemittel (149, 247) einander gegenüberliegen und durch eine Wand des Behälters und/oder eine Wand des Trägers voneinander getrennt sein können.

13. Waschsystem für eine Fahrzeugwindschutzscheibe, **dadurch gekennzeichnet, dass** es eine Vorrichtung zur Versorgung mit Scheibenreinigungsflüssigkeit nach Anspruch 11 oder 12, Mittel zum Besprühen der Windschutzscheibe mit der Flüssigkeit und Mittel zum Wischen der Windschutzscheibe umfasst.

14. Fahrzeug, **dadurch gekennzeichnet, dass** es ein Waschsystem für eine Fahrzeugwindschutzscheibe nach Anspruch 13 umfasst, **dadurch gekennzeichnet, dass** es außerdem im Fahrzeuginnenraum Mittel zum Anzeigen von Informationen in Bezug auf den Behälter umfasst.

15. Verfahren zur Steuerung des Waschsystems für die Windschutzscheibe eines Fahrzeugs nach Anspruch 13, **dadurch gekennzeichnet, dass** es einen Schritt der Identifizierung des Behälters oder der Behälter in der Aufnahme des Trägers umfasst.

16. Verfahren nach Anspruch 15, **dadurch gekennzeichnet, dass** es einen Schritt der Übertragung einer Information in Bezug auf den Behälter in den Innenraum des Fahrzeugs umfasst.

17. Verfahren nach Anspruch 16, **dadurch gekennzeichnet, dass** die übertragene Information eine oder mehrere der folgenden Informationen umfasst: Typ der in dem Behälter enthaltenen Flüssigkeit, Flüssigkeitsstand im Behälter, bereits verbrauchte Flüssigkeitsmenge und Zweckmäßigkeit, die Flüssigkeit des Behälters zum Waschen der Windschutzscheibe zu verwenden.

## Claims

1. A removable and interchangeable container (130) for windshield washer fluid, configured to be mounted in a support (110) for fixing to a vehicle, comprising identification means (145, 246a, 246b) configured to be detected by reading means (149, 247) carried by the support, the identification means (145) comprising at least one cavity intended to cooperate with reading means (247) preferably of switch type carried by the support, **characterized in that** the identification means (145) comprise two cavities of different sizes each intended to cooperate with reading means (247) preferably of switch type carried by the support.

2. The container (130) as claimed in claim 1, **characterized in that** the identification means (145) are configured to be detected by the reading means (149) with or without contact.

3. The container (130) as claimed in claim 1 or 2, **characterized in that** the identification means (145) comprise a transponder.

4. The container (130) as claimed in any one of claims 1 to 3, **characterized in that** it comprises on one of its walls a recess or a cavity (144) for housing the identification means (145).

5. The container (130) as claimed in any one of claims 1 to 4, **characterized in that** the identification means (145) are covered or carried by a label.

6. A support (110) for a removable, interchangeable container for windshield washer fluid, said support being configured to be fixed to a vehicle and comprising a housing (111) for one or more containers (130) as claimed in any one of claims 1 to 5, **characterized in that** it comprises reading means (149, 247) configured to detect identification means (145, 246a, 246b) carried by the container or containers (110).

7. The support (110) as claimed in claim 6, **characterized in that** the reading means (149, 247) are configured to detect the identification means (145, 246a, 246b) with or without contact.

8. The support (110) as claimed in claim 6 or 7, **characterized in that** the reading means (149) are configured to read the code of a transponder.

9. The support (110) as claimed in any one of claims 6 to 8, **characterized in that** it comprises an electronic module (127) housing the reading means (149).

10. The support as claimed in any one of claims 6 to 9, **characterized in that** the reading means (247) are of switch type and comprise at least one pin mobile between a retracted position and a deployed position.

11. A windshield washer fluid supply device, **characterized in that** it comprises a container (130) as claimed in any one of claims 1 to 5 and a support (110) as claimed in any one of claims 6 to 10.

12. The device as claimed in claim 11, **characterized in that**, in the position with the container (130) mounted in the housing (111) of the support (110), the identification means (145, 246a, 246b) and the reading means (149, 247) face each other and may be separated from each other by a wall of the container and/or a wall of the support.

13. A vehicle windshield washer system, **characterized in that** it comprises a windshield washer fluid supply device as claimed in claim 11 or 12, means for spraying the windshield with said fluid and means for wiping the windshield.

14. A vehicle, **characterized in that** it comprises a vehicle windshield washer system as claimed in claim 13, **characterized in that** it further comprises, in the passenger compartment, means for displaying information relating to the container.

15. A method of controlling the vehicle windshield washer system as claimed in claim 13, **characterized in that** it comprises a step of identification of the container or containers in the housing of the support.

16. The method as claimed in claim 15, **characterized in that** it comprises a step of transmitting information relating to the container to the passenger compartment of the vehicle.

17. The method as claimed in claim 16, **characterized in that** the information transmitted comprises one or more of the following: the type of fluid contained in the container, the level of fluid in the container, the quantity of fluid already used, and the benefit of using the fluid from the container for washing the windshield.
